# EUROPÄISCHE PATENTANMELDUNG

(11) **EP 4 733 503 A1**
(43) Veröffentlichungstag der Anmeldung: **29.04.2026**
(21) Anmeldenummer: 25208013.0
(22) Anmeldetag: 10.10.2025
(51) Int. Cl.: E04C 2/10, E04B 1/10, E04B 1/61, F16B 5/00, E04B 1/26

(54) **ANORDNUNG, VERWENDUNG, GEBÄUDE UND VERFAHREN ZUM ERRICHTEN EINES GEBÄUDES**

(30) Priorität: 22.10.2024 DE 102024130695
(71) Anmelder: Adolf Würth GmbH & Co. KG, 74653 Künzelsau (DE)
(72) Erfinder: STANGL, Martin, 92665 Altenstadt an der Waldnaab (DE); BARZ, Arne, 74532 Ilshofen (DE); WESTERMAYR, Maximilian, 82041 Oberhaching (DE)
(74) Vertreter: Patentanwälte Ruff, Wilhelm, Beier, Dauster & Partner mbB

(57) **Zusammenfassung**

Die Erfindung betrifft eine Anordnung mit wenigstens zwei fluchtend zueinander angeordneten Brettsperrholzelementen (12, 14), wobei die beiden Brettsperrholzelemente mit jeweils einer seitlichen Schmalfläche im Bereich eines Elementstoßes (16) aneinander anstoßen und miteinander verbunden sind, und mit einer Spanneinrichtung zum Aufbringen von Spannkräften in der Ebene der Brettsperrholzelemente, wobei die Spanneinrichtung ein erstes und ein zweites Lasteinleitungsbauteil (18) und wenigstens ein die beiden Lasteinleitungsbauteile verbindendes Spannglied (20) aufweist, wobei das Spannglied zwischen den beiden Brettsperrholzelementen im Bereich des Elementstoßes (16) angeordnet ist.

## Beschreibung

Die Erfindung betrifft eine Anordnung mit wenigstens zwei fluchtend zueinander angeordneten Brettsperrholzelementen, wobei die beiden Brettsperrholzelemente mit jeweils einer seitlichen Schmalfläche im Bereich eines Elementstoßes aneinander anstoßen und miteinander verbunden sind, und einer Spanneinrichtung zum Aufbringen von Spannkräften in der Ebene der Brettsperrholzelemente, wobei die Spanneinrichtung ein erstes und ein zweites Lasteinleitungsbauteil und wenigstens ein die beiden Lasteinleitungsbauteile verbindendes Spannglied aufweist. Die Erfindung betrifft auch eine Verwendung einer erfindungsgemäßen Anordnung, ein Gebäude mit wenigstens einer erfindungsgemäßen Anordnung und ein Verfahren zum Errichten eines Gebäudes unter Verwendung von wenigstens zwei Brettsperrholzelementen.

Brettsperrholzelemente (BSP) oder Cross-Laminated-Timber-Elemente (CLT) sind Massivholztafeln, die aus mehreren, über Kreuz flach aufeinander verleimten, vernagelten oder verdübelten Brettlagen bestehen. Üblich sind drei bis fünfzehn Lagen oder auch mehr. Im Unterschied zu Brettschichtholz, bei dem alle Brettlagen parallel zueinander angeordnet sind, sind beim Brettsperrholz die Brettlagen über Kreuz zueinander angeordnet. Brettsperrholzelemente weisen eine hohe Formstabilität auf. Brettsperrholzelemente werden als Wandelemente und Deckenelemente in Gebäuden eingesetzt.

Es ist bekannt, Brettsperrholzkonstruktionen vorzuspannen, siehe Gräfe, M., Dietsch, P., Hipper., A., Wild, M., Winter, S.: "Vorspannung von Brettsperrholzkonstruktionen, Abschlussbericht zum Forschungsvorhaben", Technische Universität München, Lehrstuhl für Holzbau und Baukonstruktionen, München 2018. Bei vorgespannten Brettsperrholzelementen wird die Führung der Spannlitzen im Holzbauteil durch einen Kanal gewährleistet. Dieser Kanal kann durch eine Tieflochbohrung oder das Aussparen eines Bretts im Produktionsvorgang des Brettsperrholzelements erstellt werden. Beide Verfahren sind komplex. Eine Lösung über eine Aussparung während der Produktion bedingt einen hochkomplexen Produktionsablauf. Schon die Rohteile der Brettsperrholzelemente müssen so erstellt werden, dass sie später exakt zueinander passen. Dies hat einen extremen Produktionsaufwand und immense Kosten zur Folge. Außerdem kann ein Spannsystem nur verwendet werden, wenn die Mittellage des Brettsperrholzelements, in der der Kanal vorgesehen wird, die gleiche Richtung wie die Außenlage aufweist.

Mit der Erfindung sollen eine Anordnung, eine Verwendung einer Anordnung, ein Gebäude und ein Verfahren zum Errichten eines Gebäudes verbessert werden.

Erfindungsgemäß ist hierzu eine Anordnung mit den Merkmalen von Anspruch 1, eine Verwendung einer Anordnung mit den Merkmalen von Anspruch 12, ein Gebäude mit den Merkmalen von Anspruch 13 und ein Verfahren mit den Merkmalen von Anspruch 14 vorgesehen. Vorteilhafte Weiterbildungen der Erfindung sind in den Unteransprüchen genannt.

Eine Anordnung weist wenigstens zwei fluchtend zueinander angeordnete Brettsperrholzelemente auf, wobei die beiden Brettsperrholzelemente mit jeweils einer seitlichen Schmalfläche im Bereich eines Elementstoßes aneinander anstoßen und miteinander verbunden sind. Es ist eine Spanneinrichtung zum Aufbringen von Spannkräften in der Ebene der Brettsperrholzelemente vorgesehen. Die Spanneinrichtung weist ein erstes und ein zweites Lasteinleitungsbauteil und wenigstens ein die beiden Lasteinleitungsbauteile verbindendes Spannglied auf. Das Spannglied ist zwischen den beiden Brettsperrholzelementen im Bereich des Elementstoßes angeordnet.

Indem das Spannglied zwischen den beiden Brettsperrholzelementen im Bereich des Elementstoßes angeordnet ist, ist die Anordnung des Spannglieds sehr einfach und erfordert insbesondere kein komplexes Fertigungsverfahren des Brettsperrholzelements. Aus fertigungstechnischen Gründen und wegen Transporterfordernissen können Brettsperrholzelemente wirtschaftlich sinnvoll nur bis zu einer bestimmten Maximalgröße hergestellt und transportiert werden, so dass Elementstöße zwischen einzelnen Brettsperrholzelementen ohnehin erforderlich sind. Wenn nun das Spannglied im Bereich des Elementstoßes angeordnet ist, so kann für die Anordnung des Spannglieds mit äußerst geringem Aufwand ein passender Raum an den Schmalseiten der Brettsperrholzelemente im Bereich des Elementstoßes geschaffen werden. Das Spannglied kann dadurch innerhalb der Anordnung und von der Außenseite kaum sichtbar angeordnet werden. Überraschenderweise ist die Anordnung des Spannglieds im Bereich des Elementstoßes möglich, auch wenn der Fachmann an und für sich davon absehen würde, das Spannglied im Bereich des Elementstoßes anzubringen, über den ja ohnehin bereits zwischen den aneinander anstoßenden Brettsperrholzelementen große Kräfte übertragen werden müssen.

Das Spannglied ist parallel zu einer Längsabmessung des Elementstoßes angeordnet, wobei eine Längsabmessung des Elementstoßes größer ist als eine Querabmessung des Elementstoßes. Mit anderen Worten verlaufen das Spannglied und die mit dem Spannglied aufgebrachte Spannkraft parallel zu den seitlichen Schmalseiten der Brettsperrholzelemente und parallel zur Längsrichtung der seitlichen Schmalseiten, wobei eine Längsabmessung der Schmalseiten in Längsrichtung wesentlich größer ist als eine Querabmessung der Schmalseiten senkrecht zur Längsrichtung.

In Weiterbildung der Erfindung ist wenigstens eines der beiden Brettsperrholzelemente in einer seitlichen Schmalfläche mit wenigstens einer in Längsrichtung der Seitenfläche verlaufenden Nut versehen, wobei die Nut oder die beiden Nuten der Brettsperrholzelemente eine Durchgangsöffnung bilden, wobei das wenigstens eine Spannglied in der Durchgangsöffnung angeordnet ist.

Mittels solcher Nuten in den seitlichen Schmalflächen der Brettsperrholzelemente, die im Bereich des Elementstoßes ineinander übergehen, kann ein für die Anordnung des Spannglieds ausreichender Raum mit äußerst geringem Aufwand geschaffen werden. Nach der Fertigung der Brettsperrholzelemente können diese maschinell und in sehr einfacher Weise mit einer Nut in ihren seitlichen Schmalflächen versehen werden. Die Nut wird zweckmäßigerweise gerade so groß gewählt, dass sie einen Anteil des Querschnitts des Spannglieds, beispielsweise etwas über 50 %, aufnehmen kann. Wenn zwei Brettsperrholzelemente am Elementstoß aneinander anliegen, kann das Spannglied dann in der durch die beiden ineinander übergehenden Nuten gebildeten Durchgangsöffnung aufgenommen werden. Im Rahmen der Erfindung kann selbstverständlich auch nur eines der Brettsperrholzelemente am Elementstoß mit einer Nut versehen sein, die groß genug ist, um das Spannelement aufzunehmen.

In Weiterbildung der Erfindung erstrecken sich die Lasteinleitungsbauteile über den Elementstoß hinweg.

Beispielsweise ist jeweils ein Lasteinleitungsbauteil an einer Oberseite und einer Unterseite der Brettsperrholzelemente im Bereich des Elementstoßes angeordnet und erstreckt sich zu beiden Seiten über den Elementstoß hinweg.

In Weiterbildung der Erfindung ist wenigstens eines der Lasteinleitungsbauteile plattenförmig ausgebildet.

Das Lasteinleitungsbauteil kann dadurch auf einer Oberseite der wenigstens zwei Brettsperrholzelemente angeordnet sein und sich über einen Abschnitt der Oberseite erstrecken. Ein plattenförmiges Lasteinleitungsbauteil kann beispielsweise aber auch in einer passenden Ausnehmung in der Oberseite der Brettsperrholzelemente angeordnet sein.

In Weiterbildung der Erfindung weist wenigstens eines der Lasteinleitungsbauteile zwei Anlageflächen auf, die an einer Giebelkante aneinander angrenzen und eine V-artige Anordnung bilden, wobei die Giebelkante der Anlagefläche im Bereich des Elementstoßes angeordnet ist.

Eine erste Anlagefläche des Lasteinleitungsbauteils liegt dann am ersten Brettsperrholzelement an und eine zweite Anlagefläche am zweiten Brettsperrholzelement. Überraschenderweise lassen sich durch Lasteinleitungsbauteile mit V-artiger Anordnung ausreichend hohe Spannkräfte aufbringen. An und für sich wäre zu erwarten, dass die V-artige Anordnung, wobei die Giebelkante der Anlagefläche im Bereich des Elementstoßes angeordnet ist, den Elementstoß zwischen den beiden Brettsperrholzelementen auseinanderdrückt. Dies kann aber durch geeignete Maßnahmen verhindert werden. Eine Einleitung der mittels des Spannglieds übertragenen Spannkraft in das Material der Brettsperrholzelemente ist durch die V-artige Anordnung der Anlageflächen deutlich besser verteilt möglich, so dass Spannungsspitzen vermieden werden können bzw. höhere Spannkräfte eingesetzt werden können.

In Weiterbildung der Erfindung schließen die Anlageflächen der V-artigen Anordnung einen Winkel zwischen 25° und 90°, insbesondere 30° bis 40°, insbesondere 30°, insbesondere 90°, ein.

In Weiterbildung der Erfindung sind die Anlageflächen der V-artigen Anordnung mit Reiboberflächen und/oder mit Vorsprüngen versehen, die eine Reibung zum jeweils an der Anlagefläche anliegenden Brettsperrholzelement erhöhen.

Auf diese Weise kann eine sichere Übertragung der Vorspannkräfte in das Material der Brettsperrholzelemente sichergestellt werden. Auch wird verhindert, dass das Lasteinleitungsbauteil den Elementstoß zwischen den beiden Brettsperrholzelementen auseinanderdrückt.

In Weiterbildung der Erfindung ist im Elementstoß zwischen den Brettsperrholzelementen wenigstens ein Lastübertragungsbauteil angeordnet, um Kräfte zwischen den beiden Brettsperrholzelementen über den Elementstoß übertragen zu können. Beispielsweise können in dem Elementstoß Bauteile mit Reiboberflächen eingelegt werden, so dass Kräfte direkt zwischen den beiden Brettsperrholzelementen übertragen werden können.

In Weiterbildung der Erfindung ist das Lastübertragungsbauteil mit Reiboberflächen und/oder Vorsprüngen versehen, um eine Reibung zum jeweils an dem Lastübertragungsbauteil anliegenden Brettsperrholzelement zu erhöhen.

In Weiterbildung der Erfindung sind die beiden Brettsperrholzelemente am Elementstoß mittels mehrerer schräg zur Vorderseite und Rückseite der Brettsperrholzelemente eingeschraubter Holzschrauben verbunden, die den Elementstoß durchsetzen.

Auf diese Weise können die Brettsperrholzelemente im Bereich des Elementstoßes sicher miteinander verbunden werden. Gegebenenfalls können zusätzlich oder alternativ Zugbänder, die den Elementstoß überbrücken, eingesetzt werden.

In Weiterbildung der Erfindung sind wenigstens zwei Brettsperrholzelemente nebeneinander und wenigstens zwei Brettsperrholzelemente aufeinander angeordnet, so dass sich der Elementstoß über die Höhe von wenigstens zwei übereinander angeordneten Brettsperrholzelementen erstreckt, wobei sich das Spannglied über die gesamte Länge des Elementstoßes erstreckt.

Eine solche Anordnung kann beispielsweise bei mehrstöckigen Gebäuden verwendet werden und sich dann über mehrere Stockwerke des Gebäudes erstrecken.

Eine erfindungsgemäße Anordnung mit wenigstens zwei fluchtend zueinander angeordneten Brettsperrholzelementen kann vorteilhaft in einem Wandaufbau oder einem Deckenaufbau eines Gebäudes eingesetzt werden.

Bei einem erfindungsgemäßen Gebäude ist wenigstens eine erfindungsgemäße Anordnung mit wenigstens zwei fluchtend zueinander angeordneten Brettsperrholzelementen vorgesehen, wobei die Brettsperrholzelemente als Wandelemente oder als Deckenelemente angeordnet sind.

Bei einem Verfahren zum Errichten eines Gebäudes unter Verwendung von wenigstens zwei Brettsperrholzelementen ist das Einlegen wenigstens eines Spannglieds im Bereich eines Elementstoßes zwischen zwei Brettsperrholzelementen, das Anordnen jeweils eines Lasteinleitungsbauteils an den Stirnflächen der Brettsperrholzelemente, so dass jedes Lasteinleitungsbauteil den Elementstoß zwischen den beiden Brettsperrholzelementen überbrückt, das Verbinden der beiden Brettsperrholzelemente am Elementstoß und das Verbinden des Spannglieds mit jedem der beiden Lasteinleitungsbauteile sowie das Vorspannen der Brettsperrholzelemente mittels Spannen des Spannglieds zwischen den beiden Lasteinleitungsbauteilen vorgesehen.

Auf diese Weise lässt sich ein Gebäude in sehr einfacher Weise errichten, da das Spannglied lediglich zwischen einem konstruktiv ohnehin erforderlichen Elementstoß zwischen zwei Brettsperrholzelementen eingelegt werden kann. Bisher erforderlicher erheblicher Aufwand, um in den Brettsperrholzelementen Kanäle für das Durchführen eines Spannglieds zu schaffen, kann dadurch entfallen. Beispielsweise ist das Anbringen einer Nut an einer Schmalseite eines Brettsperrholzelements vorgesehen, wobei die Nut dann das Spannglied aufnehmen kann. Überraschenderweise hat sich herausgestellt, dass das Anordnen des Spannglieds im Bereich des Elementstoßes in statischer Hinsicht möglich ist. Bei entsprechend belastbarer Verbindung der Brettsperrholzelemente im Bereich des Elementstoßes können die mittels des Spannglieds aufgebrachten Spannkräfte zuverlässig in die Brettsperrholzelemente übertragen werden, ohne dass das Auseinanderdrücken des Elementstoßes zu befürchten wäre.

Weitere Merkmale und Vorteile der Erfindung ergeben sich aus den Ansprüchen und der folgenden Beschreibung bevorzugter Ausführungsformen der Erfindung im Zusammenhang mit den Zeichnungen und der folgenden Beschreibung. Einzelmerkmale der unterschiedlichen, dargestellten und/oder beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind.

In den Zeichnungen zeigen:
- Fig. 1: eine abschnittsweise Darstellung einer erfindungsgemäßen Anordnung gemäß einer ersten Ausführungsform von schräg oben,
- Fig. 2: eine abschnittsweise Darstellung einer erfindungsgemäßen Anordnung gemäß einer zweiten Ausführungsform von schräg oben,
- Fig. 3: eine Schnittansicht der Anordnung der Fig. 1 bzw. der Fig. 2,
- Fig. 4: ein Lasteinleitungsbauteil für eine erfindungsgemäße Anordnung von schräg oben gemäß einer weiteren Ausführungsform,
- Fig. 5: eine schematische Vorderansicht einer erfindungsgemäßen Anordnung, wobei die Anordnung der Fig. 5 die Ausführungsformen der Fig. 1 und der Fig. 2 kombiniert,
- Fig. 6: eine Ansicht auf die Schnittebene A-A in Fig. 5,
- Fig. 7: eine schematische Schnittansicht einer Außenwand eines erfindungsgemäßen Gebäudes,
- Fig. 8: eine abschnittsweise Vorderansicht der Gebäudewand der Fig. 7 gemäß der Ausführungsform der Fig. 1,
- Fig. 9: eine Ansicht auf die Schnittebene A-A in Fig. 8,
- Fig. 10: eine weitere abschnittsweise Vorderansicht der Gebäudewand der Fig. 7 gemäß der Ausführungsform der Fig. 2 und
- Fig. 11: eine Ansicht auf die Schnittebene B-B in Fig. 10.

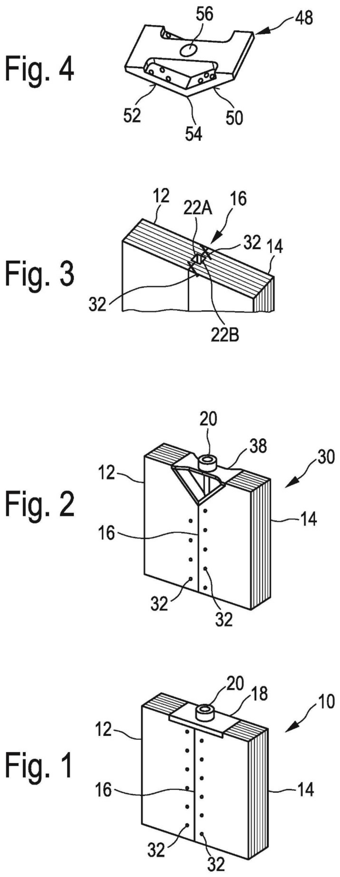

Fig. 1 zeigt eine abschnittsweise Darstellung einer erfindungsgemäßen Anordnung 10, wobei lediglich eine obere Hälfte der erfindungsgemäßen Anordnung 10 dargestellt ist. An den in Fig. 1 sichtbaren oberen Teil der Anordnung 10 schließt sich ein identischer Unterteil der Anordnung 10 an, wobei sich der Unterteil durch Spiegelung des Oberteils an der Unterseite der Anordnung 10 in Fig. 1 ergibt.

Die Anordnung 10 weist ein erstes Brettsperrholzelement 12 und ein zweites Brettsperrholzelement 14 auf, wobei die beiden Brettsperrholzelemente 12, 14 im Bereich eines Elementstoßes 16 aneinander anstoßen und aneinander anliegen. Der Elementstoß 16 wird gebildet durch eine in Fig. 1 rechte Schmalseite des Brettsperrholzelements 12 und eine in Fig. 1 linke Schmalseite des Brettsperrholzelements 14. Die Anordnung 10 weist weiter zwei Lasteinleitungsbauteile 18 auf, wobei, wie ausgeführt wurde, das zweite Lasteinleitungsbauteil zusammen mit dem Unterteil der Anordnung 10 nicht dargestellt ist. Das Lasteinleitungsbauteil 18 weist eine Basis in Form einer rechteckigen Stahlplatte auf, die in eine passende Ausnehmung in den oberen Schmalseiten der Brettsperrholzelemente 12, 14 eingesetzt ist. Das Lasteinleitungsbauteil 18 ist im Bereich des Elementstoßes 16 an der Oberseite der Anordnung 10 angeordnet und die Basisplatte erstreckt sich zu gleichen Teilen ausgehend vom Elementstoß 16 entlang der Oberseite des Brettsperrholzelements 12 sowie des Brettsperrholzelements 14. Das Lasteinleitungsbauteil 18 überbrückt den Elementstoß 16.

Das Lasteinleitungsbauteil 18 weist eine ringförmige Befestigungsanordnung auf der Oberseite der Basisplatte für ein lediglich abschnittsweise zu erkennendes Spannglied 20 auf. Das Spannglied 20 erstreckt sich von der Oberseite der Anordnung 10 bis zu einer in Fig. 1 nicht dargestellten Unterseite der Anordnung 10 und ist an der Unterseite in gleicher Weise an einem weiteren Lasteinleitungsbauteil 18 verankert. Das Spannglied 20 kann beispielsweise als Zugstange oder als Stahlseil mit mehreren Litzen ausgebildet sein. Das Spannen des Spannglieds 20 ist durch eine nicht dargestellte Vorrichtung möglich, beispielsweise durch einen Gewindeabschnitt an beiden Enden des Spannglieds 20, auf den dann eine Spannmutter aufgeschraubt wird, die sich wiederum an dem Lasteinleitungsbauteil 18 abstützt.

Es ist zu erkennen, dass überraschenderweise das Spannglied 20 im Bereich des Elementstoßes 16 verläuft. Die erfindungsgemäße Anordnung 10 kann dadurch in sehr einfacher Weise aufgebaut werden.

Eine mittels des Spannglieds aufgebrachte Spannkraft verläuft infolgedessen parallel zum Elementstoß und parallel zur Längsrichtung des Elementstoßes. In Längsrichtung weist der Elementstoß eine Längsabmessung auf, die wesentlich größer ist als eine Querabmessung des Elementstoßes senkrecht zur Längsrichtung. Die Brettsperrholzelemente 12, 14 weisen eine Dicke, eine Breite und eine Höhe auf. Der Elementstoß ist zwischen den in Höhenrichtung verlaufenden Schmalseiten der Brettsperrholzelemente 12, 14 angeordnet. Das Spannglied 20 verläuft parallel zur Höhenrichtung der Brettsperrholzelemente 12, 14 und infolgedessen in Längsrichtung des Elementstoßes. In Höhenrichtung der Brettsperrholzelemente bzw. in Längsrichtung des Elementstoßes ist eine Höhenabmessung der Brettsperrholzelemente 12, 14 bzw. eine Längsabmessung des Elementstoßes wesentlich größer als eine Dickenabmessung der Brettsperrholzelemente senkrecht zur Höhenrichtung bzw. eine Querabmessung des Elementstoßes senkrecht zur Längsrichtung.

Wie in der Schnittansicht durch die Anordnung 10 in Fig. 3 zu erkennen ist, ist jedes Brettsperrholzelement 12, 14 im Bereich des Elementstoßes 16 mit einer Nut 22a bzw. 22b versehen. Die Nuten 22a, 22b verlaufen parallel zum Elementstoß 16 und erstrecken sich jeweils ein Stück weit in die rechte Schmalseite des Brettsperrholzelements 12 bzw. in die linke Schmalseite des Brettsperrholzelements 14. Wenn die beiden Brettsperrholzelemente 12, 14 am Elementstoß 16 aneinander anliegen, gehen die beiden Nuten 22a, 22b ineinander über und bilden eine über die gesamte Höhe der Brettsperrholzelemente 12, 14 durchgehende Durchgangsöffnung. Diese Durchgangsöffnung wird dann dazu verwendet, das Spannglied 20, siehe Fig. 1, anzuordnen. Das Spannglied 20 kann dadurch innerhalb der Anordnung 10 angeordnet werden und ist dadurch nicht oder lediglich zu sehr kleinen Teilen von außerhalb der Anordnung 10 sichtbar. Vor allem aber können die Nuten 22a, 22b in sehr einfacher Weise vor dem Zusammensetzen der Brettsperrholzelemente 12, 14 zu der Anordnung 10 eingebracht werden, beispielsweise eingefräst werden. Die Brettsperrholzelemente 12, 14 können dadurch in sehr einfacher Weise hergestellt werden und die Nuten 22a, 22b können nach der Herstellung der Brettsperrholzelemente 12, 14 von außen her eingebracht werden. Das Einfräsen der Nuten 22a, 22b ist dabei wesentlich einfacher und kostengünstiger möglich als beispielsweise das Einbringen einer Bohrung, die die gesamte Höhe des Brettsperrholzelements 12 bzw. 14 durchsetzt. Überraschenderweise ist es möglich, das Spannglied 20 im Bereich des konstruktiv ohnehin erforderlichen Elementstoßes 16 zwischen zwei Brettsperrholzelementen 12, 14 anzuordnen und dennoch die statischen Anforderungen an die Anordnung 10 zu erfüllen.

Fig. 2 zeigt eine weitere Anordnung 30 gemäß einer weiteren Ausführungsform der Erfindung. Die Anordnung 30 weist die beiden Brettsperrholzelemente 12, 14 auf und im Bereich des Elementstoßes 16 zwischen den Brettsperrholzelementen 12, 14 ist eine Durchgangsöffnung angeordnet, die in gleicher Weise wie bei der Anordnung 10 ausgebildet ist und die bereits anhand der Fig. 3 erläutert wurde.

Die Anordnung 30 ist in Fig. 2 ebenfalls nur zur Hälfte dargestellt und an die Unterseite der Anordnung 30 in Fig. 2 schließt sich ein gespiegeltes Unterteil der Anordnung an, so dass die Anordnung 30 zur Unterseite in Fig. 2 symmetrisch aufgebaut ist.

Die Anordnung 30 weist zwei Lasteinleitungsbauteile 38 auf, von denen in Fig. 2 lediglich eines dargestellt ist. Das Lasteinleitungsbauteil 38 weist zwei Anlageflächen auf, wobei eine erste Anlagefläche an dem Brettsperrholzelement 12 anliegt und eine zweite Anlagefläche am Brettsperrholzelement 14. Die beiden Anlageflächen grenzen an einer Giebelkante aneinander an. Die Giebelkante ist bei der dargestellten Ausführungsform im Elementstoß 16 angeordnet. Die beiden Anlageflächen bilden eine V-artige Anordnung. Ein Winkel zwischen den beiden Anlageflächen liegt erfindungsgemäß zwischen 25° und 90°, insbesondere 30° bis 40°, und bei der Ausführungsform der Fig. 2 bei 90°.

Das Lasteinleitungsbauteil 38 ist darüber hinaus mit einer Basisplatte versehen, auf der ein Befestigungsabschnitt für das Spannglied 20 angeordnet ist. Die beiden V-artig angeordneten Anlageflächen und die Basisplatte bilden eine dreieckförmige Anordnung. Eine Unterseite der Basisplatte ist mit den jeweiligen Innenseiten der Anlageflächen verbunden, so dass sich ein äußerst stabiles Lasteinleitungsbauteil 38 ergibt.

Überraschenderweise führt der Einsatz des V-artigen Lasteinleitungsbauteils 38 nicht dazu, dass die beiden Brettsperrholzelemente 12, 14 am Elementstoß 16 auseinandergedrückt werden, wenn das Spannglied 20 vorgespannt wird. Dies wird zum einen dadurch verhindert, dass die beiden Brettsperrholzelemente 12, 14 am Elementstoß miteinander verbunden sind, beispielsweise durch mehrere, nicht dargestellte kreuzweise eingedrehte Schrauben, die sich also ausgehend vom Brettsperrholzelement 12 durch den Elementstoß 16 hindurch in das Brettsperrholzelement 14 erstrecken. Darüber hinaus können auf der in Fig. 1 und Fig. 2 dem Betrachter zugewandten Vorderseite der Anordnung 30 noch Zugbänder zwischen den beiden Brettsperrholzelementen 12, 14 angeordnet werden, die den Elementstoß 16 überbrücken. Darüber hinaus können die Anlageflächen des Lasteinleitungsbauteils 30 mit Reiboberflächen und/oder Vorsprüngen versehen sein, die eine Reibung relativ zum Brettsperrholzelement 12 bzw. dem Brettsperrholzelement 14 erhöhen. Dadurch können die Spannkräfte des Spannglieds 20 in das Brettsperrholzelement 12 bzw. das Brettsperrholzelement 14 eingeleitet werden, ohne dass der Elementstoß 16 zwischen den beiden Brettsperrholzelementen 12, 14 auseinandergedrückt wird.

In Fig. 1 und Fig. 2 sind die Köpfe von Schrauben 32 zu erkennen, die, wie bereits ausgeführt wurde, schräg in die Brettsperrholzelemente 12, 14 eingeschraubt werden und die dann den Elementstoß 16 überbrücken. Die Schrauben 32 verhindern dadurch, dass sich die Brettsperrholzelemente 12, 14 am Elementstoß 16 auseinanderbewegen.

Fig. 3 lässt zwei der Schrauben 32 erkennen und lässt auch erkennen, dass die Schrauben 32 schräg in die Brettsperrholzelemente 12, 14 eingeschraubt sind und den Elementstoß 16 durchsetzen, so dass die Schrauben die beiden Brettsperrholzelemente 12, 14 zusammenhalten.

Wie ebenfalls bereits ausgeführt wurde, können auf der Vorderseite bzw. Rückseite der Brettsperrholzelemente 12, 14 Zugbänder angebracht werden, die dann einerseits am Brettsperrholzelement 12 und andererseits am Brettsperrholzelement 14 verankert sind und den Elementstoß 16 überbrücken. Auch durch solche Zugbänder kann verhindert werden, dass die Brettsperrholzelemente 12, 14 im Bereich des Elementstoßes 16 auseinandergedrückt werden.

Fig. 4 zeigt ein Lasteinleitungsbauteil 48 gemäß einer weiteren Ausführungsform der Erfindung. Das Lasteinleitungsbauteil 48 ist als massives Stahlteil ausgebildet und weist zwei V-förmig zueinander angeordnete Anlageflächen 50, 52 auf, die an einer Giebelkante 54 aneinander angrenzen. Wie bereits ausgeführt wurde, wird die Giebelkante 54 im Elementstoß 16 angeordnet. Eine Durchgangsöffnung 56 im Lasteinleitungsbauteil 48 wird fluchtend zu der Durchgangsöffnung im Bereich des Elementstoßes 16 angeordnet und dient dazu, das Spannglied durchzuführen.

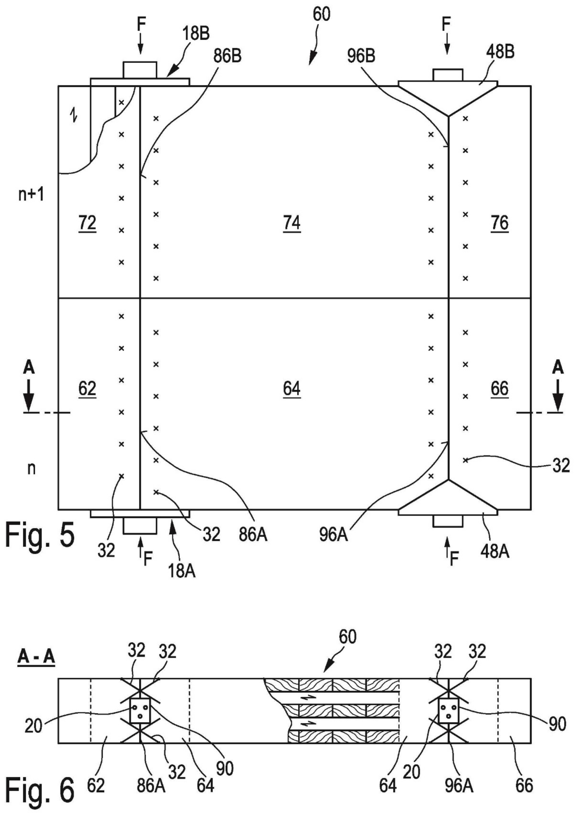

Fig. 5 zeigt eine Vorderansicht einer Anordnung 60 gemäß der Erfindung, wobei die Anordnung 60 die Ausführungsformen der Fig. 1 und der Fig. 2 miteinander kombiniert. Die Anordnung 60 bildet einen Teil einer mehrstöckigen Wand eines Gebäudes. Ein erstes Geschoss ist mit dem Buchstaben n bezeichnet, ein zweites, darüberliegendes Geschoss mit dem Buchstaben n+1.

Die Anordnung weist insgesamt sechs Brettsperrholzelemente 62, 64, 66 auf, die die Wand im Geschoss n bilden, und darüber angeordnete Brettsperrholzelemente 72, 74, 76, die die Gebäudewand im Geschoss n+1 bilden.

Die Brettsperrholzelemente 72, 74, 76 liegen mit ihrer Unterseite auf einer Oberseite der Brettsperrholzelemente 62, 64, 66 auf. Alle Brettsperrholzelemente 62, 64, 66, 72, 74, 76 sind fluchtend zueinander angeordnet, so dass sie eine Gebäudewand oder einen Abschnitt einer Gebäudewand bilden können.

Die Brettsperrholzelemente 62 und 64 liegen im Bereich eines Elementstoßes 86A aneinander an. Die Brettsperrholzelemente 72 und 74 liegen im Bereich eines Elementstoßes 86B aneinander an. Die Elementstöße 86A, 86B sind fluchtend zueinander angeordnet.

Die Brettsperrholzelemente 64 und 66 liegen im Bereich eines Elementstoßes 96A aneinander an. Die Brettsperrholzelemente 74, 76 liegen im Bereich eines Elementstoßes 96B aneinander an. Die Elementstöße 96A und 96B fluchten zueinander.

Seitlich der Elementstöße 86A, 86B, 96A, 96B sind jeweils die Köpfe von Schrauben 32 schematisch angedeutet, die schräg zur Oberfläche der Brettsperrholzelemente 62, 64, 66, 72, 74, 76 eingeschraubt sind und die den jeweiligen Elementstoß 86A, 86B, 96A, 96B durchsetzen.

Im Bereich des Elementstoßes 86A ist auf einer Unterseite der Brettsperrholzelemente 62, 64 ein Lasteinleitungsbauteil 18A angeordnet, das den Elementstoß 86A überbrückt und das in gleicher Weise ausgebildet ist wie das bereits anhand der Fig. 1 erläuterte Lasteinleitungsbauteil 18.

Im Bereich des Elementstoßes 86B ist auf einer Oberseite der Brettsperrholzelemente 72, 74 ein Lasteinleitungsbauteil 18B angeordnet, das den Elementstoß 86B überbrückt.

Zwischen den beiden Lasteinleitungsbauteilen 18A, 18B erstreckt sich ein in Fig. 5 nicht erkennbares Spannglied. Das Spannglied ist an den Lasteinleitungsbauteilen 18A, 18B befestigt und mittels des Spannglieds kann sowohl auf das Lasteinleitungsbauteil 18A als auch auf das Lasteinleitungsbauteil 18B eine Vorspannkraft F aufgebracht werden.

Fig. 6 zeigt eine Ansicht auf die Schnittebene A-A in Fig. 5. In Fig. 6 ist zunächst zu erkennen, dass die Brettsperrholzelemente 62 bis 76 aus jeweils fünf Brettlagen aufgebaut sind, die kreuzweise zueinander angeordnet sind. Der Faserverlauf der Bretter der einzelnen Lagen ist somit in einem Winkel von etwa 90° zum Faserverlauf der jeweils angrenzenden Lagen angeordnet.

Weiter ist in Fig. 6 zu erkennen, dass die Schrauben 32 den Elementstoß 86A durchsetzen und dadurch die beiden Brettsperrholzelemente 62, 64 im Bereich des Elementstoßes 86A aneinander halten.

Weiter ist in der Schnittansicht der Fig. 6 eine Durchgangsöffnung 90 zu erkennen, die durch eine Nut in der in Fig. 6 rechten Schmalfläche des Brettsperrholzelements 62 und eine Nut in der in Fig. 6 linken Schmalfläche des Brettsperrholzelements 64 gebildet ist. Die beiden Nuten gehen ineinander über. Innerhalb der Durchgangsöffnung 90 ist schematisch ein Spannglied 20 dargestellt, das aus drei Stahlseilen besteht. Das Spannglied 20 ist, wie bereits erläutert wurde, einerseits mit dem Lasteinleitungsbauteil 18A und andererseits mit dem Lasteinleitungsbauteil 18B verbunden, siehe Fig. 5.

In der in Fig. 5 rechten Hälfte der Darstellung ist zu erkennen, dass das Brettsperrholzelement 64 an dem Brettsperrholzelement 66 anliegt und dadurch ein Elementstoß 96A gebildet ist. Das Brettsperrholzelement 74 liegt an dem Brettsperrholzelement 76 an und dadurch ist ein Elementstoß 96B gebildet. Die Elementstöße 96A, 96B werden, wie bereits erläutert wurde, durch schräg eingedrehte Schrauben 32 durchsetzt.

Im Bereich des Elementstoßes 96A ist die untere rechte Ecke des Brettsperrholzelements 64 entfernt worden und es ist die untere linke Ecke des Brettsperrholzelements 66 entfernt worden, um dadurch eine V-artige Ausnehmung für die Anordnung eines Lasteinleitungsbauteils 48A zu schaffen. Eine obere rechte Ecke des Brettsperrholzelements 74 ist abgetrennt worden und eine obere linke Ecke des Brettsperrholzelements 76 ist abgetrennt worden, um eine V-artige Ausnehmung für die Anordnung eines Lasteinleitungsbauteils 48B zu schaffen. Die Lasteinleitungsbauteile 48A, 48B sind gleich ausgebildet wie das bereits anhand der Fig. 4 erläuterte Lasteinleitungsbauteil 48. Es ist zu erkennen, dass eine Giebelkante zwischen den Anlageflächen der Lasteinleitungsbauteile 48A, 48B exakt im jeweiligen Elementstoß 96A, 96B angeordnet ist.

Ein in Fig. 5 nicht erkennbares Spannglied verbindet die beiden Lasteinleitungsbauteile 48A, 48B und bringt somit sowohl auf das Lasteinleitungsbauteil 48A als auch auf das Lasteinleitungsbauteil 48B eine Vorspannkraft F auf.

In der Schnittansicht der Fig. 6 auf die Schnittebene A-A der Fig. 5 ist zu erkennen, dass der Elementstoß 96A in gleicher Weise ausgebildet ist wie der bereits erläuterte Elementstoß 86A. Es ist eine Durchgangsöffnung 90 im Bereich des Elementstoßes 96A gebildet, in dem das Spannglied 20 angeordnet ist. Schräg eingedrehte Schrauben 32 halten das Brettsperrholzelement 64 und das Brettsperrholzelement 66 im Bereich des Elementstoßes 96A zusammen.

Die Anordnung 60 der Fig. 5 und 6 kann als Gebäudewand oder als Abschnitt einer Gebäudewand eingesetzt werden und kann in äußerst zuverlässiger Weise die Aussteifung einer Tragstruktur eines Gebäudes bewirken.

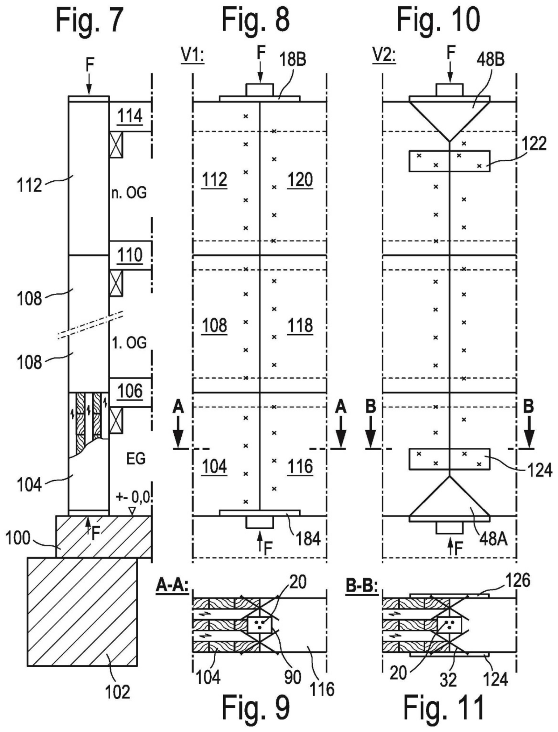

Fig. 7 zeigt eine schematische, abschnittsweise Seitenansicht eines Gebäudes, wobei das Gebäude dreistöckig ausgebildet ist und ein Erdgeschoss (EG), ein erstes Obergeschoss (1. OG) sowie ein zweites Obergeschoss (n. OG) aufweist. Im Rahmen der Erfindung können selbstverständlich auch Gebäude mit drei oder mehr Stockwerken erstellt werden.

Das Gebäude weist eine Bodenplatte 100 auf, die wiederum unterhalb der Gebäudewand auf einem Fundament 102 aufsitzt. Auf der Bodenplatte 100 sitzt mit seiner Unterseite ein erstes Brettsperrholzelement 104 auf, das sich bis zu einer Decke 106 des Erdgeschosses (EG) erstreckt. Auf der Oberseite des ersten Brettsperrholzelements 104 sitzt ein zweites Brettsperrholzelement 108 auf, das sich bis zu einer Decke 110 des ersten Obergeschosses (1. OG) erstreckt. Auf der Oberseite des zweiten Brettsperrholzelements 108 sitzt ein drittes Brettsperrholzelement 112 auf, das sich bis zu einem Dach 114 erstreckt.

Die drei aufeinandersitzenden Brettsperrholzelemente 104, 108, 112 werden mit einer Vorspannkraft F belastet.

Fig. 8 zeigt eine schematische, abschnittsweise Vorderansicht der Anordnung der Fig. 7. Das erste Brettsperrholzelement 104 ist neben einem Brettsperrholzelement 116 angeordnet, das Brettsperrholzelement 108 ist neben einem Brettsperrholzelement 118 angeordnet und das Brettsperrholzelement 112 ist neben einem Brettsperrholzelement 120 angeordnet. Die Elementstöße zwischen den Brettsperrholzelementen 104 und 116, 108 und 118 bzw. 112 und 120 fluchten zueinander. An der Unterseite der Brettsperrholzelemente 104, 116 ist ein Lasteinleitungselement 18A angeordnet, das den Elementstoß zwischen den Brettsperrholzelementen 104, 116 überbrückt. Auf der Oberseite der Brettsperrholzelemente 112, 120 ist ein Lasteinleitungsbauteil 18B angeordnet, das den Elementstoß zwischen den Brettsperrholzelementen 112, 120 überbrückt. Die Lasteinleitungsbauteile 18A, 18B sind gleich ausgebildet wie das Lasteinleitungsbauteil 18 der Fig. 1 und werden daher nicht erneut erläutert. Die beiden Lasteinleitungsbauteile 18A, 18B sind mittels eines Spannglieds 20 miteinander verbunden und gegeneinander mit der Vorspannkraft F vorgespannt.

Fig. 9 zeigt eine Ansicht auf die Schnittebene A-A, in der die Durchgangsöffnung 90 zwischen den Brettsperrholzelementen 104, 116 zu erkennen ist und auch das in der Durchgangsöffnung 90 angeordnete Spannglied 20, das, wie bereits ausgeführt wurde, die beiden Lasteinleitungsbauteile 18A, 18B miteinander verbindet und gegeneinander vorspannt. Fig. 9 lässt auch die schräg eingeschraubten Schrauben erkennen, die den Elementstoß zwischen den Brettsperrholzelementen 104, 116 durchsetzen.

Fig. 10 zeigt eine abschnittsweise Vorderansicht der Gebäudewand aus Fig. 7, wobei ein anderer Abschnitt der Gebäudewand dargestellt ist. Nachfolgend werden lediglich die Unterschiede zu dem in den Fig. 8 und 9 dargestellten Abschnitt der Gebäudewand erläutert.

Anstelle der Lasteinleitungsbauteile 18A, 18B sind gemäß Fig. 10 Lasteinleitungsbauteile 48A, 48B vorgesehen, die bereits anhand der Fig. 4 erläutert wurden. Die Lasteinleitungsbauteile 48A, 48B weisen zwei in einem Winkel von etwa 90° zueinander angeordnete Anlageflächen auf, die an einer Giebelkante aneinander angrenzen. Die Giebelkante der beiden Lasteinleitungsbauteile 48A, 48B ist jeweils in einem Elementstoß zwischen den Brettsperrholzelementen der Gebäudewand angeordnet.

Die Lasteinleitungsbauteile 48A, 48B werden mittels eines in Fig. 10 nicht erkennbaren Spannglieds 20 mit einer Kraft F gegeneinander vorgespannt.

Der Elementstoß zwischen den Brettsperrholzelementen in Fig. 10 wird nicht nur durch schräg eingedrehte Schrauben 32 überbrückt, die bereits erläutert wurden, sondern zusätzlich auch noch durch zwei Zugbänder 122, 124 sowie 126. Die Zugbänder 122, 124, 126 werden mittels schräg eingedrehter Schrauben 32, siehe Fig. 11, an der Vorderseite bzw. Rückseite der Brettsperrholzelemente befestigt. Die Schrauben 32 können dabei so lang sein, dass sie zusätzlich noch den Elementstoß zwischen den Brettsperrholzelementen durchsetzen.

## Patentansprüche

1. Anordnung mit wenigstens zwei fluchtend zueinander angeordneten Brettsperrholzelementen, wobei die beiden Brettsperrholzelemente mit jeweils einer seitlichen Schmalfläche im Bereich eines Elementstoßes aneinander anstoßen und miteinander verbunden sind, und einer Spanneinrichtung zum Aufbringen von Spannkräften in der Ebene der Brettsperrholzelemente, wobei die Spanneinrichtung ein erstes und ein zweites Lasteinleitungsbauteil und wenigstens ein die beiden Lasteinleitungsbauteile verbindendes Spannglied aufweist, **dadurch gekennzeichnet, dass** das Spannglied zwischen den beiden Brettsperrholzelementen im Bereich des Elementstoßes angeordnet ist.

2. Anordnung nach Anspruch 1, **dadurch gekennzeichnet, dass** wenigstens eines der beiden Brettsperrholzelemente in seiner seitlichen Schmalfläche mit wenigstens einer in Längsrichtung der Seitenfläche verlaufenden Nut versehen ist, wobei die Nut oder die beiden Nuten eine Durchgangsöffnung bilden, wobei das wenigstens eine Spannglied in der Durchgangsöffnung angeordnet ist.

3. Anordnung nach Anspruch 1 oder 2, **dadurch gekennzeichnet, dass** sich die Lasteinleitungsbauteile über den Elementstoß hinweg erstrecken.

4. Anordnung nach wenigstens einem der vorstehenden Ansprüche, **dadurch gekennzeichnet, dass** wenigstens eines der Lasteinleitungsbauteile plattenförmig ausgebildet ist.

5. Anordnung nach einem der vorstehenden Ansprüche, **dadurch gekennzeichnet, dass** wenigstens eines der Lasteinleitungsbauteile zwei Anlageflächen aufweist, die an einer Giebelkante aneinander angrenzen und eine v-artige Anordnung bilden, wobei die Giebelkante der Anlagefläche im Bereich des Elementstoßes angeordnet ist.

6. Anordnung nach Anspruch 5, **dadurch gekennzeichnet, dass** die Anlageflächen der v-artigen Anordnung einen Winkel zwischen 25 Grad und 90 Grad, insbesondere 30 Grad bis 40 Grad, insbesondere 30 Grad, insbesondere 90°, einschließen.

7. Anordnung nach Anspruch 5 oder 6, **dadurch gekennzeichnet, dass** die Anlageflächen der v-artigen Anordnung mit Reiboberflächen und/oder mit Vorsprüngen versehen sind, die eine Reibung zum jeweils an der Anlagefläche anliegenden Brettsperrholzelement erhöhen.

8. Anordnung nach wenigstens einem der vorstehenden Ansprüche, **dadurch gekennzeichnet, dass** im Elementstoß zwischen den Brettsperrholzelementen wenigstens ein Lastübertragungsbauteil angeordnet ist, um Kräfte zwischen den beiden Brettsperrholzelementen über den Elementstoß übertragen zu können.

9. Anordnung nach Anspruch 8, **dadurch gekennzeichnet, dass** das Lastübertragungsbauteil mit Reiboberflächen und/oder Vorsprüngen versehen ist, um eine Reibung zum jeweils an dem Lastübertragungsbauteil anliegenden Brettsperrholzelement zu erhöhen.

10. Anordnung nach wenigstens einem der vorstehenden Ansprüche, **dadurch gekennzeichnet, dass** die beiden Brettsperrholzelemente am Elementstoß mittels mehrerer schräg zur Vorderseite und Rückseite der Brettsperrholzelemente eingeschraubter Holzschrauben verbunden sind, die den Elementstoß durchsetzen.

11. Anordnung nach wenigstens einem der vorstehenden Ansprüche, **dadurch gekennzeichnet, dass** wenigstens zwei Brettsperrholzelemente nebeneinander und wenigstens zwei Brettsperrholzelemente aufeinander angeordnet sind, so dass sich der Elementstoß über die Höhe von wenigstens zwei übereinander angeordneten Brettsperrholzelementen erstreckt, wobei sich das Spannglied über die gesamte Länge des Elementstoßes erstreckt.

12. Verwendung einer Anordnung nach wenigstens einem der vorstehenden Ansprüche, **dadurch gekennzeichnet, dass** die Anordnung in einem Wandaufbau oder einem Deckenaufbau eines Gebäudes eingesetzt wird.

13. Gebäude mit wenigstens einer Anordnung nach einem der vorstehenden Ansprüche, wobei die Brettsperrholzelemente als Wandelemente oder als Deckenelemente angeordnet sind.

14. Verfahren zum Errichten eines Gebäudes unter Verwendung von wenigstens zwei Brettsperrholzelementen, **gekennzeichnet durch** Einlegen wenigstens eines Spanngliedes im Bereich eines Elementstoßes zwischen zwei Brettsperrholzelementen, Anordnen jeweils eines Lasteinleitungsbauteils an den Stirnflächen der Brettsperrholzelemente, so dass jedes Lasteinleitungsbauteil den Elementstoß zwischen den beiden Brettsperrholzelementen überbrückt, Verbinden der beiden Brettsperrholzelemente am Elementstoß und Verbinden des Spanngliedes mit jedem der beiden Lasteinleitungsbauteile und Vorspannen der Brettsperrholzelemente mittels Spannen des Spanngliedes zwischen den beiden Lasteinleitungsbauteilen.
